# EUROPEAN PATENT SPECIFICATION

(11) **EP 1 177 939 B1**
(45) Date of publication and mention of the grant of the patent: **21.11.2007**
(21) Application number: 00306674.3
(22) Date of filing: 04.08.2000
(51) Int. Cl.: B60Q 1/14, F21S 8/10, F21V 14/00, F21V 14/02, F21V 14/04, F21V 14/06, F21V 14/08

(54) **Bifunctional high intensity discharge projector headlamp**
Scheinwerfer in elliptischer Ausführung mit zwei Lichtbündel und Gasentladungslampe
Projecteur bifaisceau du genre elliptique avec lampe à décharge

(43) Date of publication of application: 06.02.2002
(73) Proprietor: FORD MOTOR COMPANY, Dearborn, MI 48126 (US)
(72) Inventor: Sayers, Edwin Mitchell, Saline, Michigan 48176 (US); Patel, Balvantrai, Rochester Hills, Michigan 48309 (US); Vozenilek, David, 708 00 Ostrava Poruba (CZ); Chinniah, Jeyachandrabose, Ann Arbor, Michigan 48105 (US); Cruz, Jose M., Livonia, Michigan 48152 (US); Erion, Jeffrey Allen, Plymouth, Michigan 48170 (US); Puma, Jaroslav, 735 06 Karvina (CZ); Cejnek, Milan, 741 01 Novy Jicin (CZ)
(74) Representative: Messulam, Alec Moses

(56) References cited:
- DE-A- 19 741 377
- US-A- 4 857 794
- US-A- 5 142 455
- US-A- 5 412 543
- US-A- 5 673 990
- PATENT ABSTRACTS OF JAPAN vol. 1995, no. 04, 31 May 1995 (1995-05-31) & JP 07 029401 A (KOITO MFG CO LTD), 31 January 1995 (1995-01-31)

## Description

The present invention relates generally to automotive headlamps, and more particularly to HID (high intensity discharge) automotive headlamps.

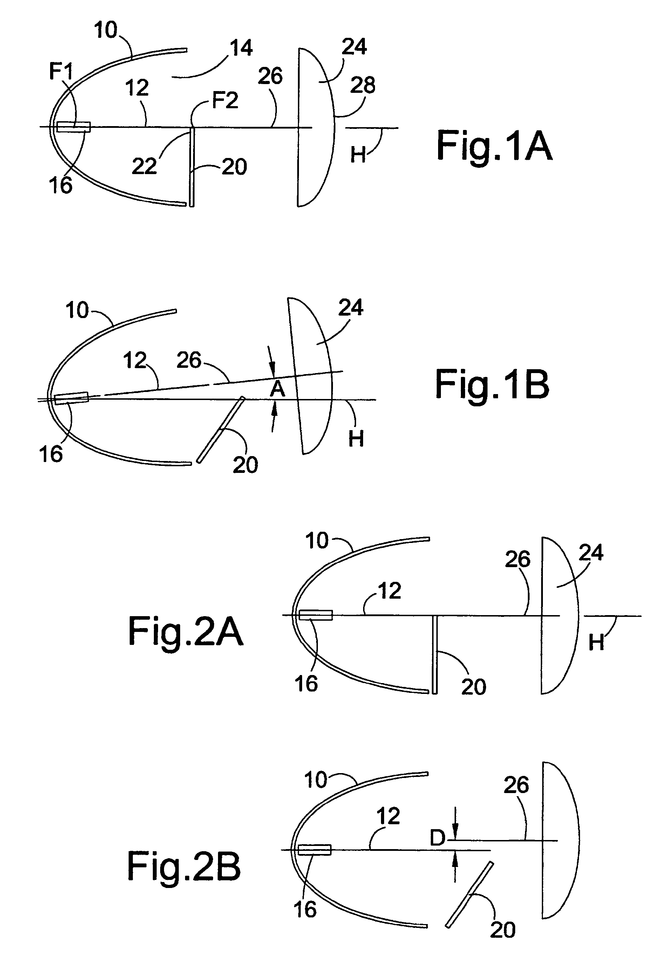

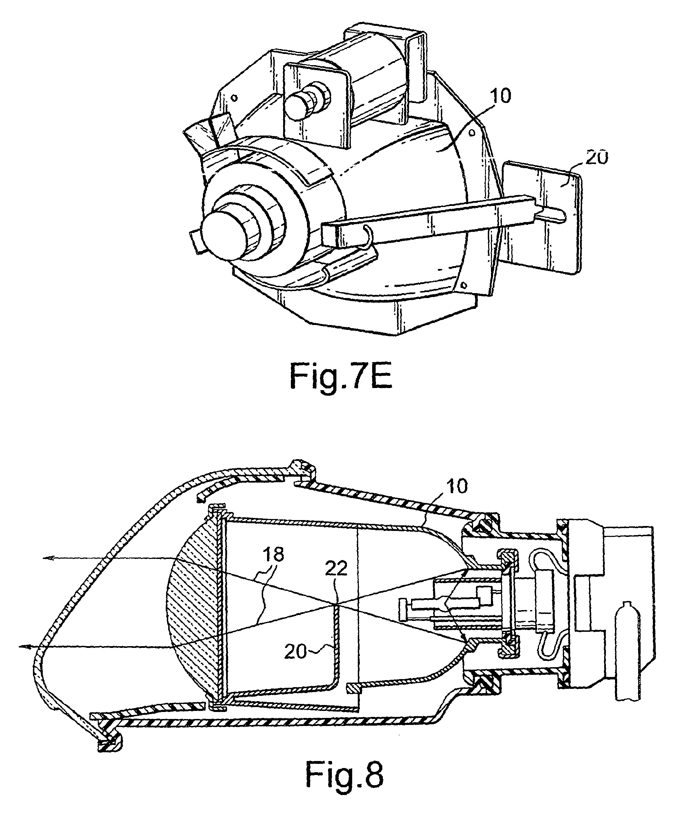

HID headlamps are commonly used nowadays in automotive applications, in large part because of the quality of light produced and because of the longevity, energy efficiency, and reliability of the lamp bulbs. Conventional automotive applications of HID projector-type headlamps are disclosed in U.S. Pat. Nos. 5,180,218 to Ohshio 5,709,451 to Flora et al., both of which are incorporated herein by reference. FIG. 8 (taken from FIG. 1 of the aforementioned Flora et al. patent) illustrates a representative prior art approach for constructing an HID headlamp for low beam conditions, which includes a light shield 20 with its top edge 22 positioned immediately beneath the second focal point F2 of the elliptical reflector 10.

In conventional HID automotive headlamp applications, the common practice is to provide two of such headlamps on each of the left-hand and right-hand front areas of the vehicle; one of these two headlamps per side would be a low beam headlamp similar to FIG. 8, while the other headlamp would be an essentially similar high beam headlamp that would not include a light shield 20. Besides the fact that the low beam headlamp has a light shield while the high beam does not, another difference between low and high beam headlamps is the respective forward-projected points in space ("hot spots") that each must be aimed at, as well as glare and intensity requirements. These requirements are specified by the Federal Motor Vehicle Safety Standard (FMVSS) and other automotive vehicle standards of the U.S. and other countries.

Although there are significant benefits in utilising HID-type lighting systems in automotive applications, one drawback is the need for two headlamps per vehicle side. It would be desirable to provide an HID-based lighting system for automotive headlamp applications which requires the use of only a single headlamp per vehicle side.

It is further known from US 4,857,794 a projector headlamp according to the preamble of claim 1, comprising a single filament headlamp unit capable of throwing both upper and lower beams.

According to a first aspect of the invention there is provided a projector headlamp for projecting light in a forward direction generally along a horizontal axis selectably between high beam and low beam conditions, said projector headlamp comprising:-
(a) a generally elliptical reflector having a reflector axis, first and second focal points located along said reflector axis, and a forward-facing reflector opening;
(b) a light source from which light waves may emanate, said light source being located substantially at said first focal point;
(c) a light shield disposed generally beneath said second focal point and having a top edge, said light shield, in said low beam condition, being oriented in a first position in which said top edge is positioned immediately beneath said second focal point and said light shield, in the high beam condition, being orientated in a second position in which said top edge is lowered away from said second focal point;
(d) a condenser lens having a condenser axis, said condenser lens being disposed forward of said reflector opening and spaced apart from said second focal point effective to substantially collimate said light waves generally in said forward direction; and
(e) means for selectably moving at least one of said light shield, said reflector, said condenser lens and said light source between said low beam and high beam conditions and in said low beam condition, said reflector axis and said condenser axis are substantially co-linear and substantially parallel to said horizontal axis and, in said high beam condition, said reflector axis and said condenser axis are substantially parallel to said horizontal axis characterised in that in said high beam condition said reflector axis is lowered by a predetermined distance (E) below said condenser axis and that the orientation of the light shield between said first and second positions is achieved by rotation of the light shield.

The invention will now be described further, by way of example, with reference to the accompanying drawings, in which:
FIGS. 1A-B are side schematic views of a projector headlamp according to a first embodiment not being part of the present invention, showing low beam and high beam conditions, respectively,
FIGS. 2A-B are side schematic views of a projector headlamp according to a second embodiment 11 not being part of the present invention, showing low beam and high beam conditions, respectively,
FIGS. 3A-B are side schematic views of a projector headlamp according to a third embodiment according to the present invention, showing low beam and high beam conditions, respectively,
FIGS. 4A-B are side schematic views of a projector headlamp according to a fourth embodiment not being part of the present invention, showing low beam and high beam conditions, respectively,
FIGS. 4C-D are perspective views of the projector headlamp represented in FIGS. 4A-B, respectively,
FIGS. 5A-B are side schematic views of a projector headlamp according to a fifth embodiment not being part of the present invention, showing low beam and high beam conditions, respectively,
FIGS. 6A-B are side schematic views of a projector headlamp according to a sixth embodiment not being part of the present invention, showing low beam and high beam conditions respectively,
FIGS. 7A-E are various perspective views of selected embodiments, and
FIG. 8 is a side section view of a projector headlamp according to the prior art.

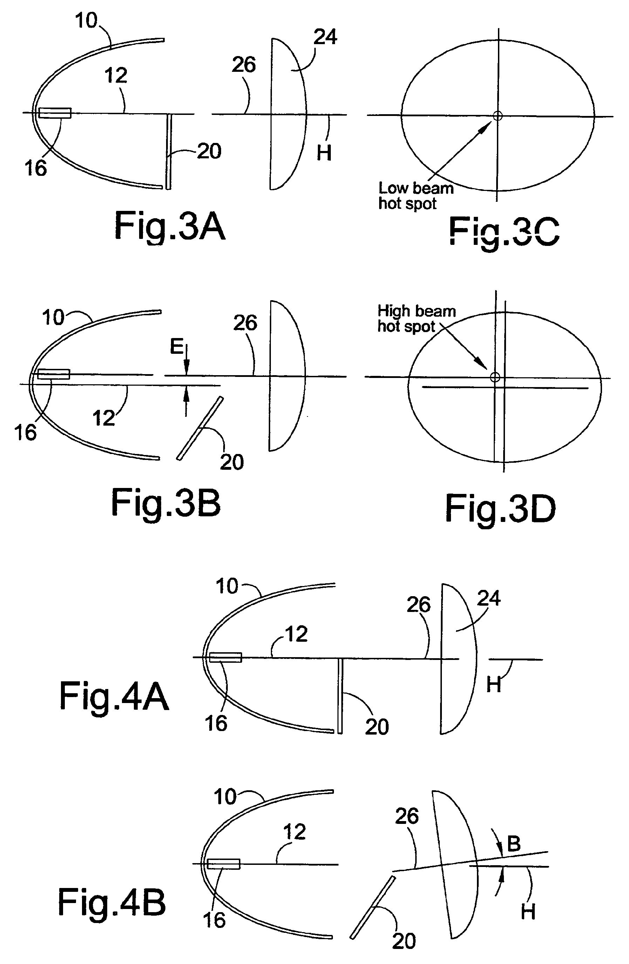

(Note: As variously used herein, "FIG. 1" refers to FIGS. 1A-B, "FIG. 2" refers to FIGS. 2A-B, and so forth.)

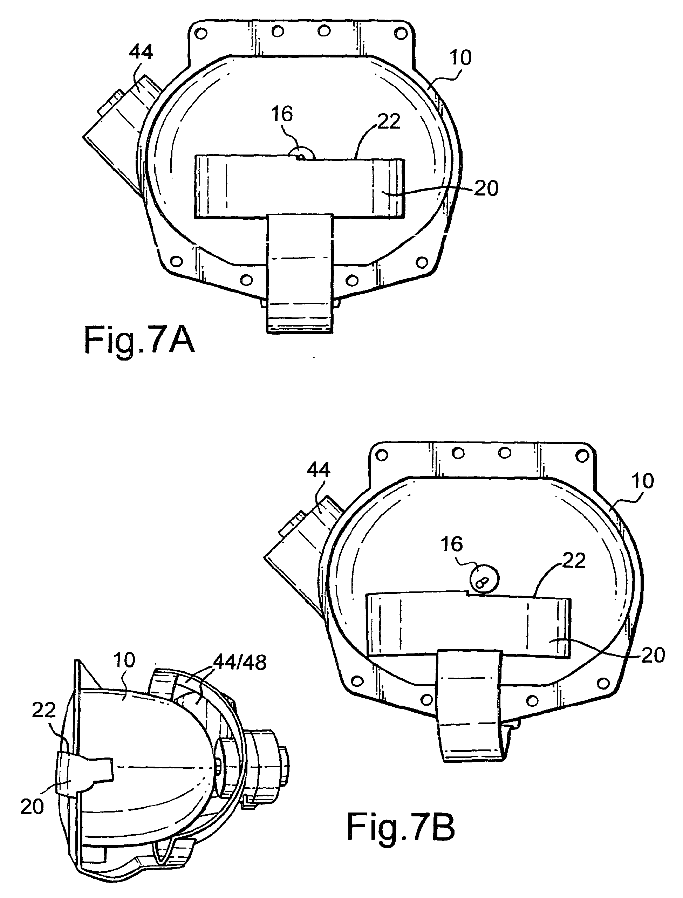

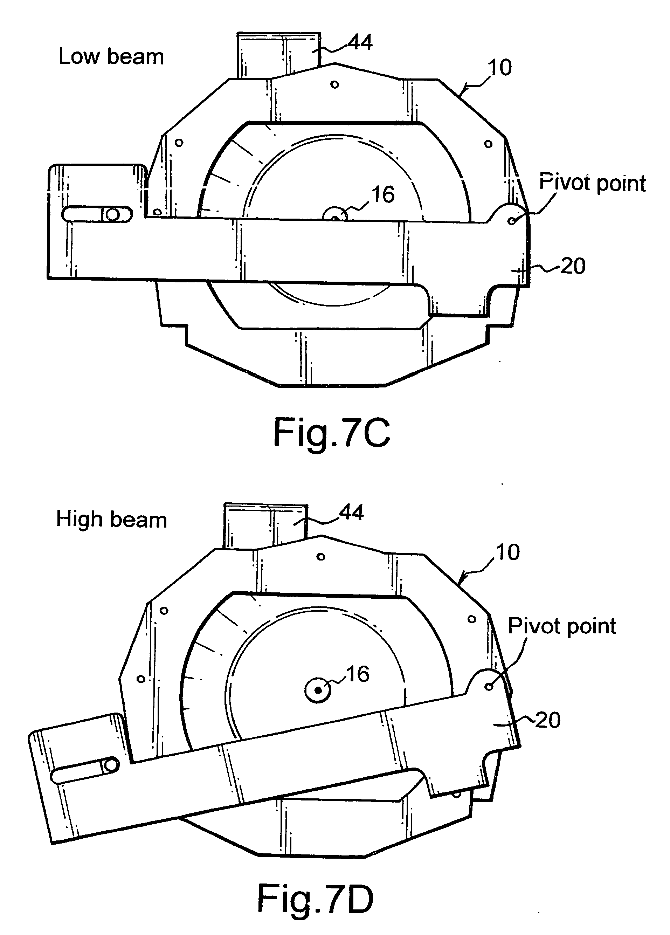

Referring now to the drawings, FIGS. 1-7 show various embodiments of a projector headlamp. In each embodiment, the projector headlamp projects light in a forward direction (e.g., in a direction in front of a vehicle into which the headlamp is installed) generally along a horizontal axis H (e.g., running along the length of the vehicle), with the headlamp being operably selectable between low beam and high beam lighting conditions. (Note that drawings suffixed with an "A" or "B" represent low beam or high beam conditions, respectively.) In each embodiment, one or more elements of the projector headlamp assembly is moved with respect to the other elements when shifting between low beam and high beam modes, so as to provide the correct hot spot needed for each condition.

To assist the reader in understanding the present invention, all reference numbers used herein are summarised in the table below, along with the elements they represent:
- 10 =: Reflector
- 12 =: Reflector axis
- 14 =: Reflector opening
- 16 =: Light source
- 18 =: Light waves from light source
- 20 =: Light shield
- 22 =: Top edge of light shield
- 24 =: Condenser lens
- 26 =: Condenser lens axis
- 28 =: Forward face of condenser lens
- 30 =: Condenser lens ring
- 32 =: Pin/axis of rotation for condenser lens/ring
- 34 =: Condenser lens ring frame (fixed)
- 36 =: Linkage(s) for condenser lens ring
- 40: Shaft/axis of rotation for light shield
- 42 =: Means for selectably moving condenser lens/ring frame
- 44 =: Means for selectably moving light shield
- 46 =: Means for selectably moving reflector
- 48 =: Means for selectably moving light source
- A =: Angle between reflector/condenser axes and horizontal
- B =: Angle between condenser axis and horizontal
- C =: Angle between reflector axis and horizontal
- D =: Displacement between condenser axis and horizontal
- E =: Displacement between reflector axis and horizontal
- F =: Displacement between light source and horizontal
- F1 =: First focal point
- F2 =: Second focal point
- H =: Horizontal axis

As illustrated in FIGS. 1A-B, a first embodiment includes: (a) a generally elliptical reflector 10 having a reflector axis 12 (also sometime referred to as an "optical axis"), first and second focal points F1/F2 located along the reflector axis, and a forward-facing reflector opening 14; (b) a light source 16 from which light waves 18 may emanate, the light source being located substantially at the first foal point F1; (c) a light shield 20 disposed generally beneath the second focal point F2 and having a top edge 22; (d) a condenser lens 24 having a condenser axis 26, the condenser lens being disposed forward of the reflector opening 14 and spaced apart from the second focal point F2 effective to substantially collimate the light waves 18 generally in the forward direction; and (e) means for selectably moving the light shield, the reflector, and the condenser lens between the low beam and high beam conditions. In the low beam condition (illustrated in FIG. 1A), the reflector and condenser axes 12/26 are substantially collinear and substantially parallel to the horizontal axis H, and the light shield 20 is oriented in a first position (e.g., generally upright) wherein the top edge 22 is positioned immediately beneath the second focal point F2. In the high beam condition (see FIG. 1B), the reflector and condenser axes 12/26 remain substantially collinear but are raised by an angle A with respect to the horizontal axis H, and the light shield 20 is oriented in a second position (e.g., tilted/rotated, or downwardly translated) wherein the top edge 22 is lowered away from the second focal point F2. A typical range for the angle A is 0° < A≤ 5°, with 1° ≤ A ≤ 3° being a preferred range. Although not shown in the drawings, the headlamp may also include a housing which encloses one or more components of the headlamp assembly, with the housing having an open end thereof through which the collimated light rays 18 may pass from the condenser lens 24.

The headlamp further includes means 46 for moving the reflector 10, means 42 for moving the condenser lens 24, and means 44 for moving the light shield 20. If the light source 16 is attached to the reflector 10, then the light source may rotate along with the reflector; however, if the light source is separately movable with respect to the reflector, then a separate means 48 for moving the light source may be needed. Each of the various means 42/44/46/48 moves a respective element 24/20/10/16 between the orientations needed for the low beam and high beam lighting conditions. Each of the means 42/44/46/48 may include one or more solenoids, motors, cams, followers, linkages, gears, bearings, pumps, and/or the like, and may be actuated electrically, electronically, mechanically, electromechanically, inductively, magnetically, optically, hydraulically, pneumatically, and/or the like.

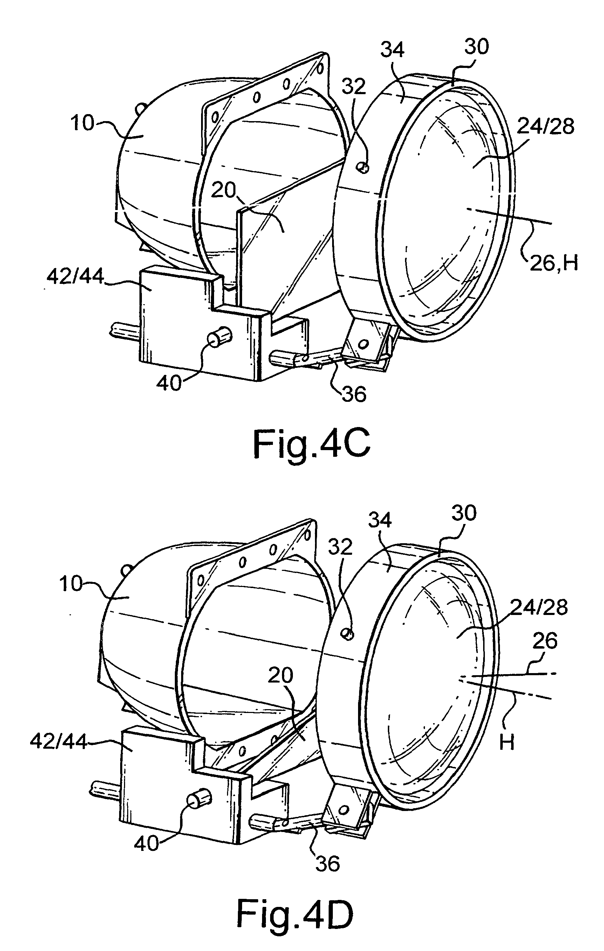

As variously required by each embodiment, each means for moving may effect rotational motion and/or translational motion of the element which it moves. For example, as illustrated in FIGS. 4C-D (relating to a fourth embodiment, described more fully below), the means 42/44 for moving the condenser lens 24 and the light shield 20 may include a gearbox (combined here into a single unit) connected to a rotatable shaft 40 (attached to or integral with the light shield 20) and a translatable set of linkages 36 (attached to a fixed condenser lens ring frame 34). FIG. 4C illustrates a low beam condition, in which the light shield 20 is placed in a generally upright orientation with its top edge 22 just under the second focal point F2, and with the condenser lens 24 being positioned with its axis 26 substantially parallel with the horizontal H. When it is desired to shift from low beam to high beam, the means 42/44 rotates the light shield 20 so that its top edge 22 is moved away from the second focal point F2, while extending the linkages 36 so as to push forward on the lower portion of the condenser lens ring 30 which holds the lens 24. As arranged in FIG. 4D, when the linkages 36 are urged forward, the condenser lens and ring 24/30 pivot about pins 32 that are captured in pivot holes formed in the ring frame 34, thereby tilting the lens 24 upward such that its axis 26 forms a desired angle B with respect to the horizontal H.

A second embodiment is illustrated in FIGS. 2A-B. Here, the projector headlamp has essentially the same structure as in the first embodiment, except that the means for moving in the present embodiment include only a means for selectably moving the light shield 20 and the condenser lens 24. For the low beam condition, the arrangements of the headlamp elements for the first and second embodiments are essentially the same (see FIGS. 1A and 2A, respectively); however, for the high beam condition, the respective arrangements differ from one another. Specifically, for the high beam condition of the second embodiment, the reflector and condenser lens axes 12/26 are presented substantially parallel to the horizontal H, with the condenser axis 26 being raised by a predetermined distance D above the unmoved reflector axis 12. Although the predetermined distance D will vary from one projector design to another, the distance should generally fall within the range of 0 mm < D≤ 5 mm.

A third embodiment is illustrated in FIGS. 3A-B. Here, the projector headlamp has essentially the same structure as in the first embodiment, except that the means for moving in the present embodiment include only a means for selectably moving the light shield 20 and the reflector 10. For the low beam condition, the arrangements of the headlamp elements for the first and third embodiments are essentially the same (see FIGS. 1A and 3A, respectively); however, for the high beam condition, the respective arrangements differ from one another. Specifically, for the high beam condition of the third embodiment, the reflector and condenser lens axes 12/26 are presented substantially parallel to the horizontal H, with the reflector and reflector axis 10/12 being lowered by a predetermined distance E below the unmoved condenser lens/condenser axis 24/26. Although the predetermined distance E will vary from one projector design to another, the distance should generally fall within the range of 0 mm < E ≤ 5 mm.

A fourth embodiment is illustrated in FIGS. 4A-B. Here, the projector headlamp has essentially the same structure as in the first embodiment, except that the means for moving in the present embodiment include only a means for selectably moving the light shield 20 and the condenser lens 24. For the low beam condition, the arrangements of the headlamp elements for the first and fourth embodiments are essentially the same (see FIGS. 1A and 4A, respectively); however, for the high beam condition, the respective arrangements differ from one another. Specifically, for the high beam condition of the fourth embodiment, the reflector axis 12 is presented substantially parallel to the horizontal H, with the forward face 28 of the condenser lens 24 being tilted upward such that the condenser axis 26 is raised by an angle B with respect to the horizontal H. The range for this angle B should generally fall within the range of 0° < B≤ 5°, with a range of about 1° ≤ B ≤ 3° being preferred.

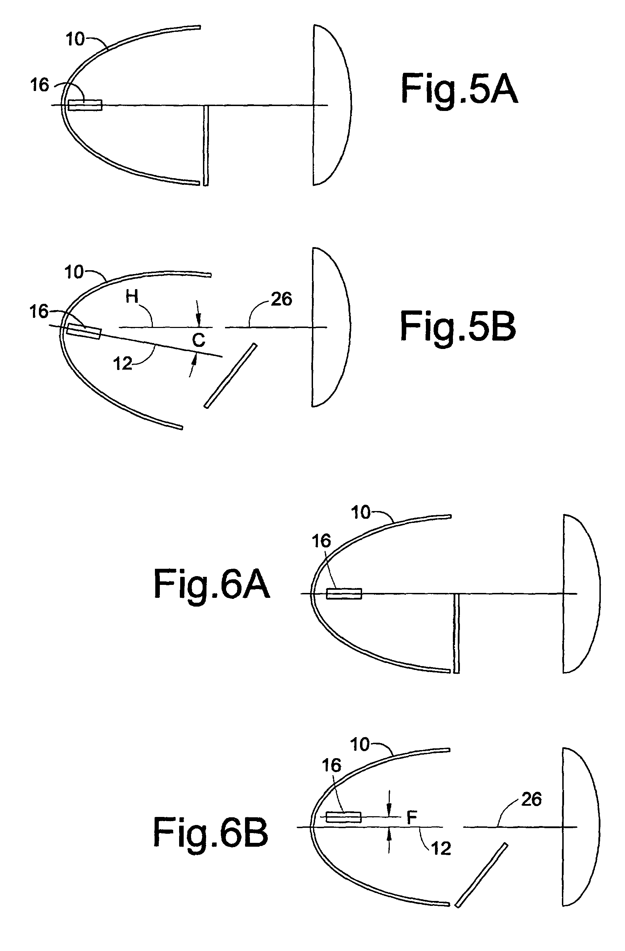

A fifth embodiment is illustrated in FIGS. 5A-B. Once again, the projector headlamp of this embodiment has essentially the same structure as in the first embodiment, except that the means for moving includes only a means for selectably moving the light shield 20 and the reflector 10. For the low beam condition, the arrangements of the headlamp elements for the first and fifth embodiments are essentially the same (see FIGS. 1A and 5A, respectively); however, for the high beam condition, the respective arrangements differ from one another. Specifically, for the high beam condition of the present embodiment, the condenser lens axes 26 is presented substantially parallel to the horizontal H, with the reflector opening 14 being tilted downward such that the reflector axis 12 is lowered by an angle C with respect to the horizontal H. A typical range for the angle C may be 0° < C ≤ 5°, with a preferred range of 1° ≤ C ≤ 3°.

A sixth embodiment is illustrated in FIGS. 6A-B. In this embodiment, the projector headlamp has generally the same structure as in the first embodiment, except that the means for moving include only a means for selectably moving the light shield 20 and the light source 16. For the low beam condition, the light source 16 is positioned substantially coincident with the first focal point F1, and the light shield 20 is oriented in a first position in which the top edge 22 is positioned immediately beneath the second focal point F2. (For comparison, see FIGS. 1A and 6A). For the high beam condition, the light shield 20 is oriented in a second position such that the top edge 22 is lowered away from the second focal point F2, and the light source 16 is raised above the first focal point F1 by a predetermined distance F, with a typical range of 0 mm < F ≤ 5 mm. In both the low beam and high beam conditions, the condenser lens 24 and reflector 10 are arranged such that their axes 26/12 are presented substantially coaxial with one another and parallel with the horizontal H.

In each of the foregoing embodiments, one or more elements within the headlamp assembly -- i.e., the reflector 10, the condenser lens 24, the light source 16, and/or the light shield 20 -- are selectably moved between their respective low beam and high beam positions by a certain angle (i.e., A, B, or C) or a certain displacement (i.e., D, E, or F) so as to shift the respective low beam and high beam hot spots to the required points in space (as required by the FMVSS and/or other regulations or requirements).

Various other modifications to the present invention may occur to those skilled in the art to which the present invention pertains. For example, although the present invention is especially suited for use with HID lamps, it is also possible that other types of light sources might equally well be used. Also, for some designs it may be desirable to mount the light source 16 within the reflector 10 (with the light source 16 coinciding with the first focal point F1, of course); however, for other designs it may instead be desirable to have the light source not mounted directly to the reflector, such as is the case in the sixth embodiment of the present invention.

## Claims

1. A projector headlamp for projecting light in a forward direction generally along a horizontal axis selectably between high beam and low beam conditions, said projector headlamp comprising:
(a) a generally elliptical reflector (10) having a reflector axis, first and second focal points located along said reflector axis, and a forward-facing reflector opening;
(b) a light source (16) from which light waves may emanate, said light source (16) being located substantially at said first focal point;
(c) a light shield (20) disposed generally beneath said second focal point and having a top edge, said light shield(20), in said low beam condition, being oriented in a first position in which said top edge is positioned immediately beneath said second focal point and said light shield (20), in the high beam condition, being orientated in a second position in which said top edge is lowered away from said second focal point;
(d) a condenser lens (24) having a condenser axis, said condenser lens (24) being disposed forward of said reflector opening and spaced apart from said second focal point effective to substantially collimate said light waves generally in said forward direction; and
(e) means for selectably moving at least one of said light shield, said reflector, said condenser lens and said light source between said low beam and high beam conditions, and, in said low beam condition, said reflector axis and said condenser axis are substantially co-linear and substantially parallel to said horizontal axis and, in said high beam condition, said reflector axis and said condenser axis are substantially parallel to said horizontal axis, **characterised in that** in the high beam condition said reflector axis is lowered by a predetermined distance (E) below said condenser axis and that the orientation of the light shield (20) between said first and second positions is achieved by rotation of the light shield (20).

2. A projector headlamp as claimed in claim 1 wherein the predetermined distance (E) is in the range 0 to 5 mm.

## Patentansprüche

1. Projektionsscheinwerfer zum Projizieren von Licht in eine Richtung nach vorne, im Allgemeinen entlang einer horizontalen Achse, wählbar zwischen einem Fernlicht- und einem Abblendlichtzustand, wobei der Projektionsscheinwerfer umfasst:
(a) einen im Allgemeinen elliptischen Reflektor (10), welcher eine Reflektorachse aufweist, einen ersten und einen zweiten Brennpunkt, welche sich entlang der Reflektorachse befinden, und eine nach vorne gewandte Reflektoröffnung;
(b) eine Lichtquelle (16), von welcher Lichtwellen ausgehen können, wobei die Lichtquelle (16) sich im Wesentlichen an dem ersten Brennpunkt befindet;
(c) einen Lichtschirm (20), welcher im Allgemeinen unterhalb des zweiten Brennpunkts angeordnet ist und einen oberen Rand aufweist, wobei der Lichtschirm (20), in dem Abblendlichtzustand, in einer ersten Position orientiert ist, in welcher der obere Rand unmittelbar unterhalb des zweiten Brennpunkts positioniert ist, und wobei der Lichtschirm (20), in dem Fernlichtzustand, in einer zweiten Position orientiert ist, in welcher das obere Ende abgesenkt ist, weg von dem zweiten Brennpunkt;
(d) eine Kondensorlinse (24), welche eine Kondensorachse aufweist, wobei die Kondensorlinse (24) nach vorne, von der Reflektoröffnung, angeordnet ist und beabstandet von dem zweiten Brennpunkt, wirksam, um im Wesentlichen die Lichtwellen im Allgemeinen in die Richtung nach vorne zu bündeln; und
(e) Mittel zum wählbaren Bewegen wenigstens eines, von dem Lichtschirm, dem Reflektor, der Kondensorlinse und der Lichtquelle, zwischen dem Abblendlicht- und dem Fernlichtzustand, wobei in dem Abblendlichtzustand die Reflektorachse und die Kondensorachse im Wesentlichen kollinear sind und im Wesentlichen parallel zu der horizontalen Achse, und wobei, in dem Fernlichtzustand, die Reflektorachse und die Kondensorachse im Wesentlichen parallel sind zu der horizontalen Achse, **dadurch gekennzeichnet, dass**, in dem Fernlichtzustand, die Reflektorachse abgesenkt ist, um eine vorbestimmte Entfernung (E), unter die Kondensorachse, und dass die Orientierung des Lichtschirms (20), zwischen der ersten und der zweiten Position, durch Rotation des Lichtschirms (20) erreicht wird.

2. Projektionsscheinwerfer nach Anspruch 1, wobei die vorbestimmte Entfernung (E) sich in dem Bereich von 0 bis 5 mm befindet.

## Revendications

1. Lampe frontale de projecteur destinée à projeter de la lumière en direction de l'avant, généralement en suivant un axe horizontal, en choisissant entre les conditions rayon haut et rayon bas, ladite lampe frontale de projecteur comprenant :
(a) un réflecteur généralement elliptique (10) ayant un axe de réflecteur, des premier et second foyers situés le long dudit axe de réflecteur et une ouverture de réflecteur orientée vers l'avant ;
(b) une source lumineuse (16) dont des ondes lumineuses peuvent émaner, ladite source lumineuse (16) étant située sensiblement au niveau dudit premier foyer;
(c) un pare-lumière (20) disposé d'une façon générale sous ledit deuxième foyer et comprenant un bord supérieur, ledit pare-lumière (20), dans ladite condition rayon bas, étant orienté dans une première position dans laquelle ledit bord supérieur est placé immédiatement sous ledit second foyer et ledit pare-lumière (20), dans la condition rayon haut, étant orienté dans une seconde position dans laquelle ledit bord supérieur est écarté vers le bas par rapport au dit second foyer ;
(d) une lentille de condensateur (24) comprenant un axe de condensateur, ladite lentille de condensateur (24) étant disposée à l'avant de ladite ouverture de réflecteur et séparée dudit second foyer afin de collimater sensiblement lesdites ondes lumineuses d'une façon générale dans ladite direction vers l'avant ; et
(e) des moyens destinés à déplacer de manière sélective au moins l'un dudit pare-lumière, dudit réflecteur, de ladite lentille de condensateur et de ladite source lumineuse entre lesdites conditions rayon bas et rayon haut et, dans ladite condition rayon bas, ledit axe de réflecteur et ledit axe de condensateur sont sensiblement colinéaires et sensiblement parallèles au dit axe horizontal et, dans ladite condition rayon haut, ledit axe de réflecteur et ledit axe de condensateur sont sensiblement parallèles au dit axe horizontal, **caractérisé en ce que** dans la condition rayon haut, ledit axe de réflecteur est abaissé d'une distance prédéterminée (E) au-dessous dudit axe de condensateur, et **en ce que** l'orientation du pare-lumière (20) entre lesdites première et seconde positions est réalisée par rotation du pare-lumière (20).

2. Lampe frontale de projecteur selon la revendication 1 dans laquelle la distance prédéterminée (E) est dans la plage de 0 à 5 mm.
